# FASCICULE DE BREVET EUROPEEN

(11) **EP 1 066 148 B1**
(45) Date de publication et mention de la délivrance du brevet: **28.03.2007**
(21) Numéro de dépôt: 99936046.4
(22) Date de dépôt: 26.02.1999
(51) Int. Cl.: B29C 45/00, B29C 45/28

(54) **PROCEDE DE REALISATION D'UNE PIECE DE CARROSSERIE DE VEHICULE AUTOMOBILE PAR INJECTION D'UNE MATIERE PLASTIQUE, PROCEDE D'INJECTION SEQUENTIELLE DE MATIERE PLASTIQUE, MOULE POUR METTRE EN OEUVRE CES PROCEDES, ET PIECE EN MATIERE PLASTIQUE AINSI OBTENUE**
VERFAHREN ZUM HERSTELLEN EINES KRAFTFAHRZEUG-BAUTEILS DURCH EINSPRITZEN VON KUNSTSTOFFMATERIAL, VERFAHREN ZUM SEQUENZIELLEN EINSPRITZEN VON KUNSTSTOFFMATERIAL, FORM ZUR DURCHFÜHRUNG DES VERFAHRENS, UND SO HERGESTELLTES BAUTEIL
METHOD FOR PRODUCING A MOTOR VEHICLE BODY PART BY PLASTIC MATERIAL INJECTION, METHOD FOR SEQUENTIAL INJECTION OF PLASTIC MATERIAL, MOULD FOR IMPLEMENTING SAID METHODS, AND RESULTING PLASTIC PART

(30) Priorité: 26.02.1998 FR 9802360
(43) Date de publication de la demande: 10.01.2001
(73) Titulaire: COMPAGNIE PLASTIC OMNIUM, 69007 Lyon (FR)
(72) Inventeur: MARTINEZ, Bernard, F-01460 Murieux-Volognat (FR)
(74) Mandataire: Remy, Vincent Noel Paul
(86) Numéro de dépôt international: PCT/FR1999/000440
(87) Numéro de publication internationale: WO 1999/043484

(56) Documents cités:
- EP-A- 0 043 174
- EP-A- 0 630 731
- FR-A- 2 054 560
- GB-A- 2 136 364
- GUYOT H: "SEQUENTIAL SOLUTIONS" EUROPEAN PLASTICS NEWS, vol. 21, no. 9, 1 octobre 1994, page 29 XP000482835 cité dans la demande
- PATENT ABSTRACTS OF JAPAN vol. 18, no. 616 (M-1710), 24 novembre 1994 & JP 06 238704 A (TOYODA GOSEI CO LTD), 30 août 1994
- PATENT ABSTRACTS OF JAPAN vol. 95, no. 9, 31 octobre 1995 -& JP 07 144340 A (HONDA MOTOR CO LTD), 6 juin 1995
- PATENT ABSTRACTS OF JAPAN vol. 18, no. 616 (M-1710), 24 novembre 1994 & JP 06 238706 A (HONDA MOTOR CO LTD), 30 août 1994
- PATENT ABSTRACTS OF JAPAN vol. 97, no. 5, 30 mai 1997 & JP 09 001690 A (NISSEI PLASTICS IND CO), 7 janvier 1997

## Description

La présente invention a pour objet un procédé de réalisation d'une pièce de carrosserie de véhicule automobile par injection d'une matière plastique, un procédé d'injection séquentielle de matière plastique, un moule pour mettre en oeuvre ces procédés, et les pièces en matière plastique ainsi obtenues.

Les ailes et les panneaux extérieurs de portières de véhicules automobiles constituent des pièces particulièrement difficiles à réaliser en matière plastique du fait qu'elles doivent à la fois présenter un très bon état de surface, posséder de bonnes propriétés mécaniques et résister au traitement de cataphorèse indispensable aux parties métalliques de la carrosserie et au châssis du véhicule.

De plus, en raison de leur faible épaisseur, soit environ 2 à 3 mm, pour une surface de l'ordre du m², ces pièces ont une géométrie qui se prête mal à l'injection, ce qui oblige à une bonne maîtrise des conditions d'injection, sauf à tolérer des défauts de surface traduisant notamment un fluage irrégulier de la matière plastique dans le moule.

Pour améliorer la qualité de surface de telles pièces, il est connu, par exemple du document "SEQUENTIAL SOLUTIONS" [H. Guyot], publié dans EUROPEAN PLASTICS NEWS, vol. 21, N° 9, d'octobre 1994, page 29, de procéder à une injection séquentielle de la matière afin de remplir la cavité du moule par tranches successives.

Cependant, ce procédé d'injection séquentielle n'est approprié que pour des matières thermoplastiques dont le point de fusion est relativement bas, comme le polypropylène, car les busettes à obturateur que l'on utilise ne fonctionnent que dans une plage de températures limitée.

Or, pour obtenir des propriétés mécaniques particulières, on réalise certaines pièces de carrosserie, notamment des ailes, en un alliage de polyamide et de polyphénylène-éther qui est une matière qui s'injecte à très haute température, de préférence à 310°C.

Une telle température d'injection est incompatible avec une injection séquentielle mise en oeuvre grâce aux busettes à obturateur actuellement disponibles.

Il existe donc un besoin pour un procédé d'injection séquentielle d'une matière plastique à très haute température.

La présente invention vise à proposer de nouveaux procédés permettant de résoudre ces inconvénients.

La présente invention a d'abord pour objet un procédé de réalisation d'une pièce de carrosserie de véhicule automobile par injection séquentielle d'une matière plastique dans un moule alimenté par un ou des canaux froids, consistant à remplir d'abord une première région d'extrémité du moule, puis une deuxième région adjacente à la première, et à répéter l'opération consistant à remplir toujours une nouvelle région adjacente à la précédente, jusqu'à atteindre une dernière région d'extrémité du moule, opposée à la première région, caractérisé par le fait que l'on obture chaque canal froid à l'aide d'une tige froide axialement mobile dans un alésage interceptant le canal froid, la section longitudinale de la tige recouvrant la section transversale du canal.

Selon l'invention, on entend par canal froid et tige froide un canal et une tige non chauffés, qui se trouvent donc à la température du moule au moment de l'injection.

Le procédé selon l'invention convient en particulier pour injecter séquentiellement un alliage de polyamide et de polyphénylène-éther, bien que cette matière soit très sensible aux écarts de température et fige très rapidement juste après son injection, à tel point que si cet alliage est injecté dans un moule à travers des canaux froids, c'est-à-dire des canaux d'alimentation qui ne sont pas préchauffés au moment de l'injection, il se forme à l'intérieur de chaque canal une gaine de viscosité plus élevée que le reste de l'alliage fondu, laquelle gaine pénètre dans l'empreinte du moule à une vitesse inférieure à celle de l'alliage fondu, ce qui se traduit par des défauts de surface qui peuvent entraîner le rejet de la pièce si celle-ci ne satisfait pas les conditions minimales de qualité de surface.

Les inventeurs à la base de la présente invention ont constaté que, contrairement à toute attente, les défauts de surface observés auparavant, notamment dans le cas d'une injection en plusieurs points à travers des canaux froids, disparaissent si l'on remplit le moule en commençant par une extrémité de celui-ci, en progressant jusqu'à son extrémité opposée.

La présente invention est en particulier intéressante lorsqu'il s'agit d'injecter une matière plastique à haute température, comme l'alliage de polyamide et de polyphénylène-éther précité, dont l'injection se fait au-dessus de 290°C de préférence 310°C.

Dans un mode de mise en oeuvre préféré de l'invention, la matière plastique utilisée est donc un alliage du type devant être injecté à plus de 290°C, notamment un alliage de polyamide et de polyphénylène-éther, tel que l'alliage commercialisé sous la marque NORYL GTX de la Société GENERAL ELECTRIC PLASTICS B.V..

Pour procéder à l'injection de la matière plastique par remplissage de régions contiguës du moule en partant d'une extrémité de ce dernier, on peut, selon un mode de mise en oeuvre particulier de l'invention, utiliser un moule comportant plusieurs canaux froids pour acheminer la matière plastique dans l'empreinte du moule, et obturer ces canaux froids au début de l'injection puis les ouvrir séquentiellement pour injecter la matière plastique dans chaque région successive du moule.

A cet égard, la présente invention présente l'avantage que les obturateurs mis en oeuvre sont très peu encombrants et peuvent être juxtaposés en étant très proches les uns des autres, ce qui permet de réaliser des moules ayant des grappes serrées de canaux, ce qui était impossible avec les busettes à obturateur chauffées utilisées jusqu'à présent compte tenu de leur encombrement.

Dans une variante particulière de ce mode de mise en oeuvre, après avoir ouvert un canal froid, on le referme individuellement avant d'ouvrir le canal froid suivant, puis on ouvre tous les canaux froids pour compacter la matière plastique et la maintenir sous pression lors de son refroidissement.

On réalise ainsi une injection séquentielle en plusieurs points.

Etant donné que les canaux d'alimentation de l'empreinte sont des canaux froids, on s'attend à ce que le fait d'y faire stagner de la matière plastique fondue ait tendance à figer cette dernière dans les canaux mais les essais réalisés par les inventeurs ont montré que l'on peut ouvrir, fermer et à nouveau ouvrir chaque canal sans occasionner de défaut dans la pièce obtenue.

Dans une variante préférée, la tige utilisée comme obturateur sert également d'éjecteur pour démouler la grappe de matière plastique provenant des canaux froids lors du moulage de la pièce en matière plastique.

La présente invention a également pour objet un procédé d'injection séquentielle de matière plastique dans un moule alimenté par des canaux froids, en vue d'obtenir une pièce de carrosserie de véhicule automobile, caractérisé par le fait qu'il consiste à ménager dans le moule des alésages interceptant les canaux froids et des tiges froides axialement mobiles dans ces alésages, la section longitudinale de chaque tige recouvrant la section transversale du canal correspondant, à obturer les canaux froids à l'aide des tiges au début de l'injection et à les ouvrir individuellement en déplaçant les tiges dans les alésages.

Ce procédé présente l'avantage de pouvoir être mis en oeuvre d'une manière simple, en évitant d'avoir recours à des busettes à obturateur.

En outre, le procédé selon l'invention permet d'exécuter des injections séquentielles dans des moules dont l'empreinte ne permettrait pas de loger des busettes à obturateur.

Comme exemple d'application de l'injection séquentielle, on peut citer le procédé déjà décrit consistant à remplir le moule en partant d'une de ses extrémités en direction de son extrémité opposée, mais il est clair que le procédé d'injection séquentielle selon l'invention n'est pas limité à cette application.

L'invention a également pour objet un moule d'injection pour mettre en oeuvre les procédés décrits ci-dessus, caractérisé par le fait qu'il comporte, comme obturateur d'un canal froid, une tige dont la section longitudinale recouvre la section transversale du canal froid, la tige étant axialement mobile dans un alésage interceptant le canal froid entre une position de fermeture dans laquelle elle se trouve en travers du canal froid et une position d'ouverture dans laquelle elle se trouve en retrait du canal froid et laisse libre la section transversale de ce dernier.

Un tel moule présente l'avantage d'être particulièrement économique à fabriquer et à entretenir.

En effet, du point de vue fabrication, le recours à de simples tiges froides pour obturer les canaux froids diminue le prix de revient du moule d'un facteur cinq ou sept. En ce qui concerne l'entretien, l'absence de bloc chaud dans le moule élimine les temps de refroidissement et de chauffage qui allongent généralement la durée des arrêts de maintenance.

Dans une variante préférée, la tige sert également d'éjecteur pour démouler la grappe de matière plastique provenant des canaux froids lors du démoulage de la pièce en matière plastique.

Cette variante fournit un moule d'utilisation très flexible car ce moule peut aussi bien être utilisé pour mettre en oeuvre l'invention, c'est-à-dire avec obturation des canaux froids par les éjecteurs puis éjection de la pièce obtenue, que pour effectuer un moulage sans obturation des canaux froids, les éjecteurs ne servant alors qu'à éjecter la pièce obtenue.

Dans un mode de réalisation particulier, la tige est montée sur un vérin autonome qui lui permet de se déplacer dans l'alésage et de venir obturer le canal froid alors que le moule est fermé.

En d'autres termes, ce vérin permet à la tige de réaliser les deux fonctions d'obturateur et d'éjecteur, la fonction d'obturateur étant remplie lorsque le moule est fermé et que le vérin autonome enfonce 1a tige dans l'alésage pour intercepter le canal froid, la fonction d'éjecteur étant remplie lorsqu'après l'injection, la tige ramenée en position normale par le vérin autonome sert à éjecter la grappe résultant du remplissage des canaux froids au moment du démoulage de l'ensemble de la pièce.

La présente invention a également pour objet les pièces en matière plastique obtenues par mise en oeuvre des procédés décrits ci-dessus.

Dans le but de mieux faire comprendre l'invention, on va en décrire maintenant un mode de réalisation donné à titre d'exemple non limitatif en référence au dessin annexé dans lequel :
- la figure 1 représente schématiquement le principe d'injection de la matière plastique dans le moule,
- la figure 2 est une vue en perspective d'un moule ouvert,
- la figure 3 est une section selon III-III de la figure 2,
- la figure 4 est une vue à plus grande échelle de la partie IV de la figure 3 après fermeture du moule,
- la figure 5 est une vue en coupe selon V-V de la figure 4.

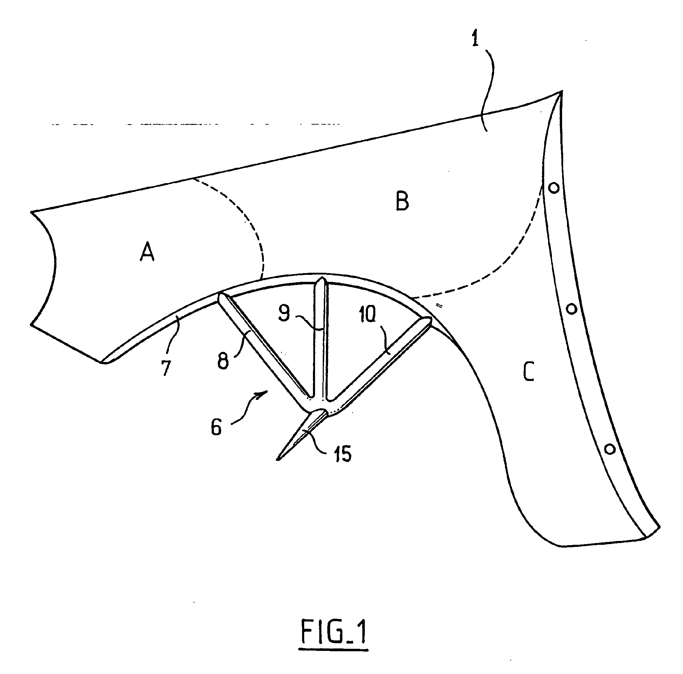

La pièce de carrosserie 1 représentée à la figure 1 est une aile avant gauche de véhicule automobile.

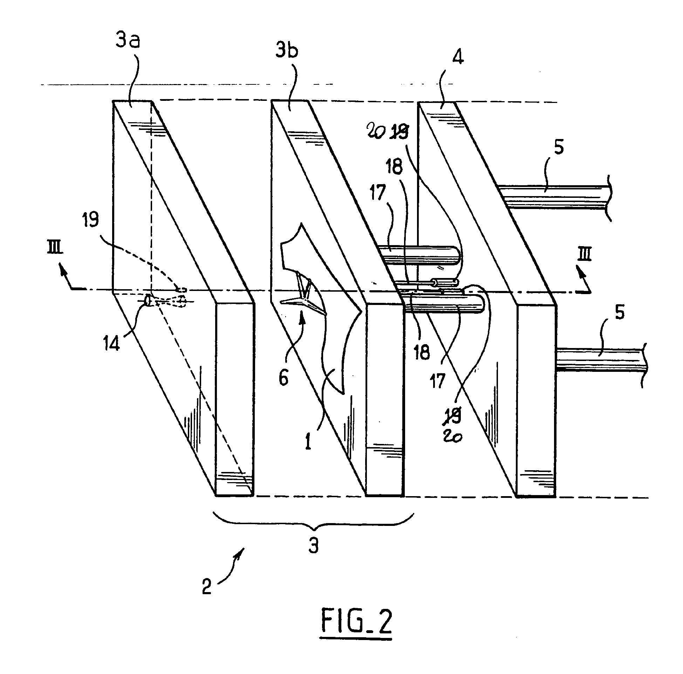

Pour fabriquer cette aile, on a utilisé le dispositif 2 représenté aux figures 2 à 5.

Ce dispositif comprend un moule 3 en deux parties, l'une 3a fixe, l'autre 3b mobile, et une plaque d'éjection 4 également mobile grâce à deux gros vérins hydrauliques 5.

Sur les figures 1 et 2, l'aile 1 est représentée dans l'état où elle se trouve juste après son moulage, c'est pourquoi une grappe d'injection 6 est solidarisée à son bord replié vers l'intérieur 7 qui délimite le passage de roue.

Cette grappe d'injection 6 est constituée par la matière plastique présente, à la fin de l'injection, dans les canaux froids du moule, comme cela va être expliqué plus en détail.

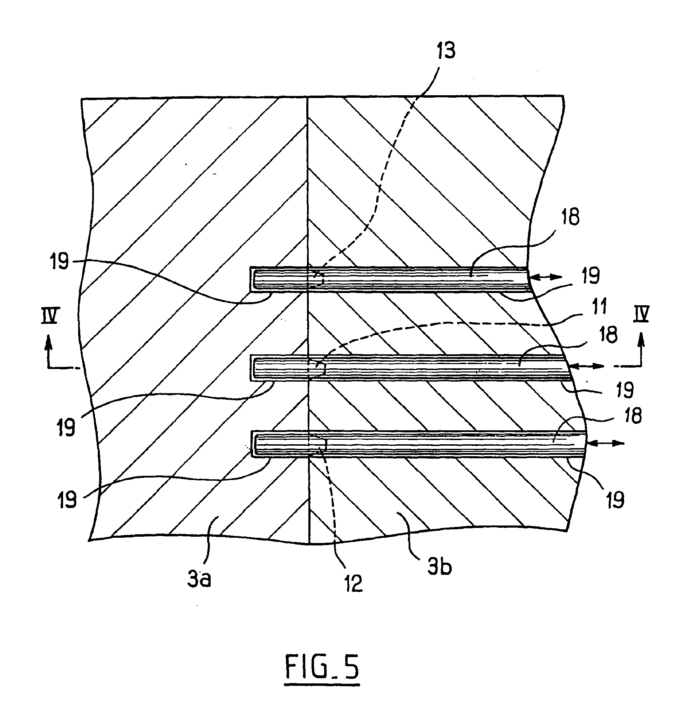

En pratique, cette grappe 6 se détache spontanément de l'aile 1 au moment de son éjection hors du moule 3 du fait que les trois carottes 8,9,10 de la grappe, reliées à l'aile, présentent un rétrécissement de section à leur extrémité solidaire du bord replié 7 de l'aile. Chacune de ces trois carottes 8,9,10 correspond à un canal froid d'injection 13,11,12 (visibles tous les trois à la figure 5) désigné ci-après canal secondaire, les trois canaux secondaires étant collectivement alimentés par un canal principal 14, perpendiculaire aux précédents, et relié à une vis d'injection (non représenté) qui fournit la matière plastique fondue sous pression.

On peut noter que les canaux secondaires 11,12,13, sont définis dans le moule d'injection, lequel ne comporte pas de moyen de chauffage de sorte que les canaux secondaires peuvent être qualifiés de canaux froids.

La matière plastique présente dans le canal principal 14 au moment du refroidissement de la pièce forme une quatrième carotte 15 perpendiculaire aux carottes 8,9,10.

La matière plastique utilisée pour réaliser l'aile de carrosserie décrite ici est le produit connu sous la marque NORYL GTX de la société GENERAL ELECTRIC PLASTICS B.V..

Ce produit a été injecté à une température de 310°C.

Pour remplir le moule, on a obturé les trois canaux secondaires 11,12,13 alimentés collectivement par le canal principal 14, puis on a ouvert le canal secondaire 13 le plus proche de l'extrémité avant de l'aile pour remplir une première région du moule correspondant à la partie A de l'aile en figure 1. On a ensuite refermé ce premier canal secondaire 13 pour ouvrir le deuxième canal secondaire 11 situé sensiblement au milieu de l'aile pour remplir une deuxième région du moule correspondant à la partie B de l'aile et contiguë à la première région, puis on a refermé ce deuxième canal 11 secondaire pour ouvrir le troisième canal secondaire 12 et remplir une troisième région du moule, contiguë à la deuxième et correspondant à la partie C de l'aile située à l'opposé de sa partie avant A.

On a ensuite ouvert les trois canaux secondaires pour permettre le compactage de la matière plastique injectée et son maintien en pression lors du refroidissement de la pièce.

En remplissant ainsi de proche en proche tout le volume du moule à partir d'une extrémité de la pièce, on a pu obtenir des pièces ne présentant pas de défaut de surface visible et notamment pas celui résultant d'un écart de viscosité au sein de la matière plastique injectée.

Les moyens utilisés pour obturer les canaux secondaires, dans le mode de réalisation décrit, vont maintenant être expliqués.

L'empreinte de l'aile est définie entre les parties fixe 3a et mobile 3b du moule, lesquelles sont agencées de manière qu'après injection de la matière plastique et refroidissement de la pièce, lorsque l'on ouvre le moule en éloignant sa partie mobile de sa partie fixe, (la plaque d'éjection se déplaçant solidairement à la partie mobile), l'aile 1 et la grappe d'éjection 6 restent solidaires de la partie mobile 3b du moule.

Comme on le voit à la figure 5, la section trapézoïdale des canaux secondaires 11,12,13 est intégralement comprise dans l'épaisseur de la paroi de la partie mobile du moule, la partie fixe 3a du moule formant la grande base du trapèze.

En revanche, le canal principal 14, qui alimente collectivement les trois canaux secondaires 11,12,13, traverse la partie fixe 3a du moule et débouche du côté de la partie mobile au point d'intersection des trois canaux secondaires.

Une fois le moule ouvert, la pièce en matière plastique doit être éjectée de la partie mobile du moule, ce qui est effectué par les éjecteurs montés sur la plaque d'éjection 4.

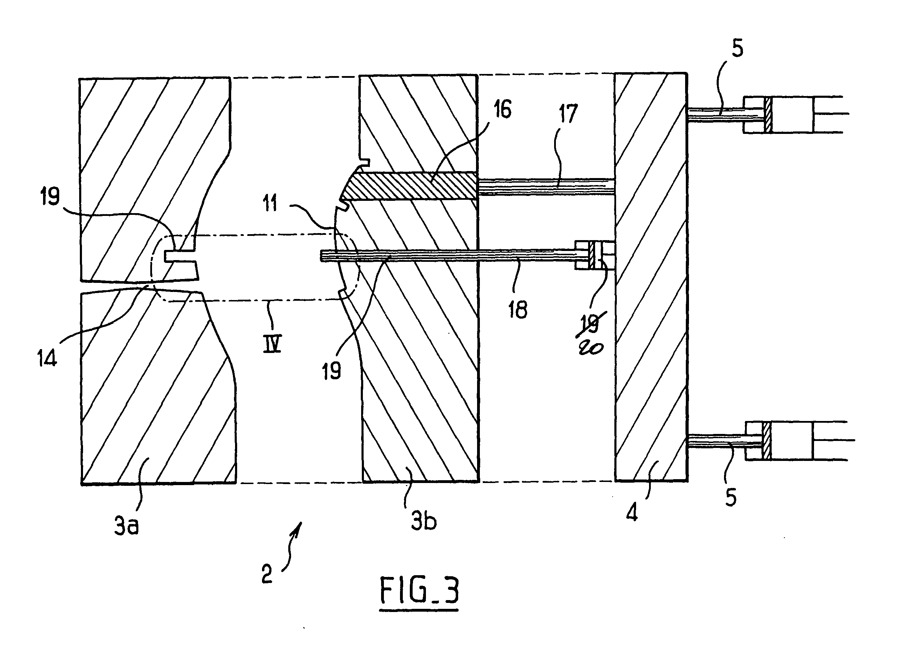

Les éjecteurs de l'aile proprement dite sont constitués par des pavés mobiles 16 (figure 3) découpés dans l'épaisseur de la partie mobile 3b et aptes à se déplacer grâce à des tiges 17 avec la plaque d'éjection 4 en direction de la partie fixe du moule, grâce aux deux gros vérins hydrauliques 5.

Pour l'éjection de la grappe de matière plastique, trois tiges 18 sont montées sur la plaque d'éjection 4, chacune de ces tiges 18 traversant la partie mobile 3b du moule et débouchant dans un canal secondaire 11,12,13.

Un petit vérin hydraulique individuel 20 est monté à la base de chacune des tiges pour permettre le déplacement individuel de chaque tige, indépendamment des autres tiges, par rapport à la plaque d'éjection.

Comme on le voit sur la figure 5, chaque tige 18 est logée dans un alésage 19 traversant la partie mobile 3b du moule et se prolongeant dans la partie fixe 3a du moule, sur une profondeur d'environ 2 cm.

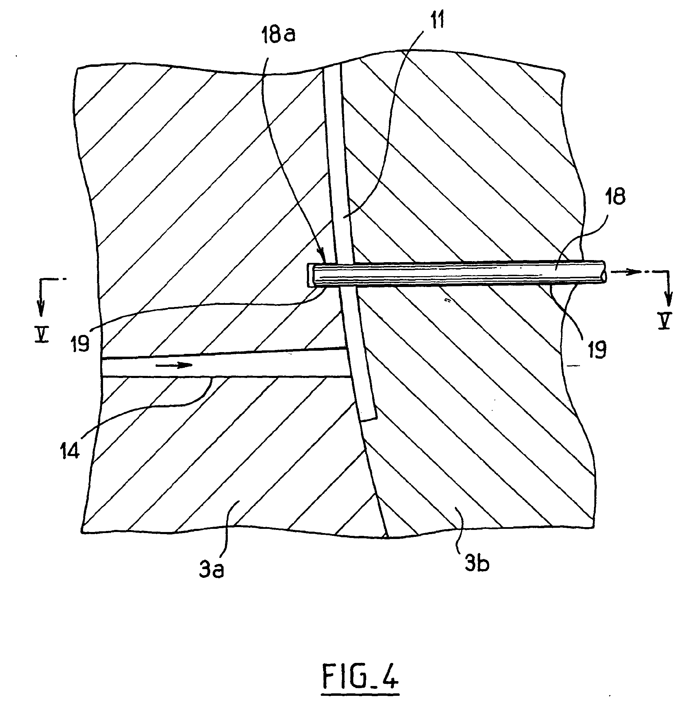

Ainsi, à l'état fermé du moule, comme représenté aux figures 4 et 5, chaque tige 18 peut venir prendre une position de fermeture dans laquelle elle occupe tout l'alésage 19 en pénétrant dans la partie fixe 3a du moule et en obturant le canal secondaire 11 correspondant et une position d'ouverture dans laquelle son extrémité avant 18a se trouve en retrait du canal secondaire 11 et laisse libre la section de passage de ce dernier.

On voit, sur la figure 5, que la section longitudinale de chaque tige 18 est supérieure à la section transversale de chaque cavité secondaire 11,12,13 de sorte que, lorsque la tige 18 s'étend en travers du canal secondaire, elle l'obture complètement.

On comprend donc que suivant la position des tiges d'éjecteurs 18 dans le moule, la section de passage de chaque canal secondaire est libre ou obturée.

Par conséquent, chaque tige 18 peut remplir, en plus de sa fonction d'éjecteur, la fonction d'obturateur du canal secondaire correspondant.

Ainsi, lors de l'injection de la matière plastique pour réaliser l'aile de la figure 1, les trois tiges 18 sont tout d'abord placées en position de fermeture.

La tige 18 correspondant au canal secondaire 13, qui alimente l'extrémité avant de l'aile, est ensuite placée en position d'ouverture pendant une durée de 0,7 seconde, puis placée à nouveau en position de fermeture, après quoi, la tige 18 correspondant au canal secondaire 11, qui alimente le milieu de l'aile, est placée en position d'ouverture pendant 0,7 seconde, puis est également remise en position de fermeture. Enfin, la même opération est répétée avec la tige 18 du troisième canal secondaire 12.

Les trois tiges sont ensuite ramenées en position d'ouverture pour assurer le compactage de la matière plastique et son maintien sous pression lors du refroidissement.

Les tiges en position d'ouverture sont ensuite aptes à faire office d'éjecteurs, comme cela a déjà été décrit.

A l'ouverture du moule, il ne reste donc plus qu'à éjecter l'aile et la grappe en déplaçant la plaque d'éjection en direction de la partie mobile du moule en actionnant uniquement les gros vérins 5.

Il est bien entendu que le mode de réalisation qui vient d'être décrit ne présente aucun caractère limitatif et qu'il pourra recevoir toutes modifications désirables sans sortir pour cela du cadre de l'invention.

## Revendications

1. Procédé de réalisation d'une pièce de carrosserie (1) de véhicule automobile par injection séquentielle d'une matière plastique dans un moule (3) alimenté par un ou des canaux froids (11, 12, 13), consistant à remplir d'abord une première région d'extrémité (A) du moule, puis une deuxième région (B) adjacente à la première, et à répéter l'opération consistant à remplir toujours une nouvelle région adjacente à la précédente, jusqu'à atteindre une dernière région (C) d'extrémité du moule, opposée à la première région (A), **caractérisé par le fait que** l'on obture chaque canal froid à l'aide d'une tige froide (18) axialement mobile dans un alésage (19) interceptant le canal froid, la section longitudinale de la tige recouvrant la section transversale du canal.

2. Procédé selon la revendication 1, **caractérisé par le fait que** la matière plastique est du type devant être injectée à plus de 290 °C, notamment un alliage de polyamide (PA) et de polyphénylène-éther (PPE).

3. Procédé selon l'une quelconque des revendications 1 ou 2, **caractérisé par le fait que** l'on utilise un moule (3) comportant plusieurs canaux froids (11, 12, 13) pour acheminer la matière plastique dans l'empreinte du moule, que l'on obture ces canaux froids au début de l'injection et qu'on les ouvre séquentiellement pour injecter la matière plastique dans chaque région (A, B, C) successive du moule.

4. Procédé selon la revendication 3, **caractérisé par le fait qu'**après avoir ouvert chaque canal froid (11, 12, 13), on le referme individuellement avant d'ouvrir le canal froid suivant, puis on ouvre tous les canaux froids pour compacter la matière plastique et la maintenir sous pression lors de son refroidissement.

5. Procédé selon l'une quelconque des revendications 1 à 4, **caractérisé par le fait que** la tige (18) sert également d'éjecteur pour démouler la grappe (6) de matière plastique provenant des canaux froids lors du démoulage de la pièce en matière plastique.

6. Moule d'injection pour mettre en oeuvre le procédé selon l'une quelconque des revendications 1 à 5, **caractérisé par le fait qu'**il comporte, comme obturateur d'un canal froid, une tige (18) dont la section longitudinale recouvre la section transversale du canal froid, la tige étant axialement mobile dans un alésage (19) interceptant le canal froid entre une position de fermeture dans laquelle elle se trouve en travers du canal froid et une position d'ouverture dans laquelle elle se trouve en retrait du canal froid et laisse libre la section transversale de ce dernier.

7. Moule selon la revendication 6, **caractérisé par le fait que** la tige (18) sert également d'éjecteur pour démouler la grappe (6) de matière plastique provenant des canaux froids lors du démoulage de la pièce en matière plastique.

8. Moule selon la revendication 7, **caractérisé par le fait que** la tige (18) est montée sur un vérin autonome (20) qui lui permet de se déplacer dans l'alésage et de venir obturer le canal froid alors que le moule est fermé.

9. Moule selon la revendication 6, **caractérisé par le fait qu'**il est configuré pour permettre de fabriquer une aile de véhicule automobile.

10. Moule selon la revendication 6, **caractérisé par le fait qu'**il est configuré pour permettre de fabriquer un panneau extérieur de portière de véhicule automobile.

## Claims

1. A method et producing an automotive vehicle body part (1) by injecting a plastics material sequentially into a mold (3) fed by one or more cold runners (11, 12, 13), the method consisting filling firstly a first region (A) at one end of the mold, then a second region (B) adjacent to the first region, and repeating the operation consisting in filling a new region adjacent to the preceding region each time, until a last region (C) of the mold is reached at its end opposite from the first region (A), the method being **characterized in that** each cold runner is shut off using a cold rod (18) which is axially movable in a bore (19) intersecting the cold runner, the longitudinal section of the rod overlaying the cross section of the runner.

2. A method according to claim 1, **characterized in that** the plastics material is of the type which must be injected at more than 290°C, in particular an alloy of a polyamide (PA) and polyphenyfene-ether (PPE)

3. A method according to any one of claims 1 to 2, **characterized in that** a mold (3) is used **in that** comprises a plurality of cold runners (11, 12, 13) to direct the plastics material into the mold cavity, **in that** said cold runners are shut off at the start of injection and **in that** they are sequentially opened to inject plastics material into each successive region (A, B, C) of the mold.

4. A method according to claim 3, **characterized in that** after each cold runner (11, 12, 13) has been opened, it is individually shut off again before the next cold runner is opened, and then all the cold runners are opened to compact the plastics material and keep it under pressure as it cools.

5. A method according to any one of claims 1 to 4, **characterized in that** the rod (18) also acts as an ejector to unmold the sprue tree (6) of plastics material from the cold runners on unmolding the plastics material part.

6. An injection mold for carrying out the method defined in any one of claims 1 to 5, the mold being **characterized in that** it comprises, as a shut-off for a cold runner, a rod (18) with a longitudinal section which overlays the cross section of the cold runner, the rod being axially movable in a bore (19) intersecting the cold runner between a shut off position in which it traverses the cold runner and an open position in which it is retracted from the cold runner and leaves the cross section of the cold runner open.

7. A mold according to claim 6, **characterized in that** the rod (18) also acts as an ejector for unmolding the plastics material sprue tree (6) originating from the cold runners on unmolding the plastics material part.

8. A mold according to claim 7, **characterized in that** the rod (18) la mounted on an independent actuator (20) which allows it to be displaced in the bore to shut off the cold runner while the mold is closed.

9. A mold according to claim 6, **characterized in that** it is configured so that a fender of a motor vehicule can be made.

10. A mold according to claim 6, **characterized in that** it is configured so that an external panel of a door of a motor vehicule can be made.

## Patentansprüche

1. Verfahren zum Herstellen eines Karosserieteiles (1) eines Automobils durch aufeinander folgendes Einspritzen eines Kunststoffes in eine Form (3), die durch einen oder mehrere kalte Kanäle (11, 12, 13) gespeist wird, deren Sinn es ist, zuerst einen ersten äußeren Teil (A) der Form zu füllen, danach einen zweiten Bereich (B), der dem ersten benachbart ist, und den Vorgang zu wiederholen, der darin besteht, immer einen neuen Bereich auszufüllen, der dem vorhergehenden benachbart ist, bis ein letzter Bereich (C) des äußeren Teiles der Form erreicht ist, welcher dem ersten Bereich (A) gegenüber liegt, **dadurch gekennzeichnet, dass** man jeden kalten Kanal mit Hilfe eines kalten Bolzens (18) verschließt, der in axialer Richtung in einer Bohrung (19) beweglich ist, die den kalten Kanal schneidet, wobei der Längsteil des Bolzens den Querschnitt des Kanals verschließt.

2. Verfahren nach Anspruch 1, **dadurch gekennzeichnet, dass** der Kunststoff so beschaffen ist, dass er vor dem Einspritzen eine Temperatur von mehr als 290 °C aufweisen muss und es sich insbesondere um eine Mischung aus Polyamid (PA) und Polypropylenester (PPE) handelt.

3. Verfahren nach einem beliebigen der Ansprüche 1 oder 2, **dadurch gekennzeichnet, dass** eine Form (3) benutzt wird, die mehrere kalte Kanäle (11, 12, 13) aufweist, um den Kunststoff in den Abguss der Form zu leiten, so dass diese kalten Kanäle am Beginn des Einspritzens verschlossen werden und dass sie nacheinander geöffnet werden, um den Kunststoff in jeden der aufeinander folgenden Bereiche (A. B, C) einzuspritzen.

4. Verfahren nach Anspruch 3, **dadurch gekennzeichnet, dass**, nachdem jeder kalte Kanal (11. 12, 13) geöffnet worden ist, man ihn einzeln wieder verschließt, bevor der nächste kalte Kanal geöffnet wird, und dass man dann alle kalten Kanäle öffnet, damit der Kunststoff verdichtet wird und er während seiner Abkühlung unter Druck gehalten wird.

5. Verfahren nach einem beliebigen der Ansprüche 1 bis 4, **dadurch gekennzeichnet, dass** der Bolzen (18) gleichermaßen als Auswerfer dient, um den Spritzbaum(6) aus Kunststoff, der von den kalten Kanälen herrührt, aus der Form zu drücken, wenn das Kunststoffteil aus der Form genommen wird.

6. Spritzform zum Durchführen des Verfahrens nach einem beliebigen der Ansprüche 1 bis 5, **dadurch gekennzeichnet, dass** sie als Verschluss eines kalten Kanals einen Bolzen (18) aufweist, dessen Längsteil den Querschnitt des kalten Kanals abdeckt, wobei der Bolzen in Längsrichtung in einer Bohrung (19) beweglich ist und den kalten Kanal so schneidet, dass er sich in der geschlossenen Position quer über den kalten Kanal erstreckt und in der geöffneten Position aus dem kalten Kanal zurückgezogen ist und den Querschnittsbereich des letzteren offen lässt.

7. Form nach Anspruch 6, **dadurch gekennzeichnet, dass** der Bolzen (18) gleichermaßen als Auswerfer zum Entfernen des Spritzbaums (6) aus Kunststoff, der von den kalten Kanälen herrührt, dient, wenn das Kunststoffteil der Form entnommen wird.

8. Form nach Anspruch 7, **dadurch gekennzeichnet, dass** der Bolzen (18) auf einer unabhängigen Spindel (20) befestigt ist, so dass er in der Bohrung verschiebbar ist und den kalten Kanals verschließen kann, während die Form geschlossen wird.

9. Form nach Anspruch 6, **dadurch gekennzeichnet**, das sie so konstruiert ist, dass sie das Herstellen eines Kotflügels für ein Automobil ermöglicht.

10. Form nach Anspruch 6. **dadurch gekennzeichnet, dass** sie so konstruiert ist, dass sie das Herstellen einer Außenverkleidung einer Automobiltür ermöglicht.
